Europäisches Patentamt

European Patent Office

Office européen des brevets

(19)

(11) Veröffentlichungsnummer : **0 054 224**
**B1**

(12) **EUROPÄISCHE PATENTSCHRIFT**

(45) Veröffentlichungstag der Patentschrift : **17.10.84**

(51) Int. Cl.³ : **G 03 B 23/16, G 03 B 23/06**

(21) Anmeldenummer : **81110097.3**

(22) Anmeldetag : **03.12.81**

(54) **Rundmagazin für Überblendprojektor.**

(30) Priorität : **13.12.80 DE 8033232 U**

(43) Veröffentlichungstag der Anmeldung :
**23.06.82 Patentblatt 82/25**

(45) Bekanntmachung des Hinweises auf die Patenterteilung : **17.10.84 Patentblatt 84/42**

(84) Benannte Vertragsstaaten :
**CH DE FR GB LI**

(56) Entgegenhaltungen :
**EP-A- 0 005 072**
**DE-A- 2 123 841**

(73) Patentinhaber : **KODAK AKTIENGESELLSCHAFT**
**Postfach 369**
**D-7000 Stuttgart-Wangen 60 (DE)**
**DE**
**EASTMAN KODAK COMPANY**
**343 State Street**
**Rochester New York 14650 (US)**
**CH FR GB LI**

(72) Erfinder : **Sachs, Günter .**
**Hedelfinger Strasse 48**
**D-7302 Ostfildern 1 (DE)**

(74) Vertreter : **Lewandowsky, Klaus et al**
**Kodak Aktiengesellschaft Patentabteilung Postfach 369**
**D-7000 Stuttgart 60 (DE)**

EP 0 054 224 B1

## Beschreibung

Die Erfindung betrifft ein Rundmagazin zur Aufnahme von Diapositiven, das lösbar mit einem zwei Bildbühnen und zwei Projektionssysteme aufweisenden Überblendprojektor verbindbar ist und das aus einer feststehenden Bodenplatte mit einer Öffnung für den Durchtritt der Diapositive und einem auf der Bodenplatte drehbar gelagerten Gefachkörper besteht.

Aus der DE-OS 21 23 841 ist ein Überblendprojektor bekannt, der zwei Bildbühnen und zwei Projektionssysteme aufweist. Betrachtet man das Gerät in Blickrichtung auf seine Frontseite, so erkennt man als Baugruppen jeweils ein linkes und ein rechtes Projektionssystem. Im Rundmagazin des Überblendprojektors sind die Dias in vorgegebener Projektionsfolge in einer Gefachringreihe angeordnet. Die projektorseitige Diawechselvorrichtung entnimmt aufeinanderfolgende Dias in der Projektionsfolge aus den entsprechenden Fächern des Rundmagazins und führt sie abwechselnd einer der beiden Bildbühnen zu. Nach der Projektion wird jedes Dia unter Beibehaltung der vorgegebenen Reihenfolge in sein ursprünglich im Rundmagazin eingenommenes Fach zurückgeführt. Für die wechselweise Eingabe der Dias in die beiden Bildbühnen weist die Diawechselvorrichtung eine quer zu den beiden Projektionsstrahlengängen arbeitende Verschiebevorrichtung auf, die das Rundmagazin abwechselnd zwischen zwei Arbeitsstellungen bewegt und damit zu einer der beiden Bildbühnen ausrichtet, d. h., daß in der vom Betrachter aus gesehenen linken Arbeitsstellung des Rundmagazins ein Diafach des Gefachringes über der dem linken Projektionssystem zugeordneten Bildbühne und in der rechten Arbeitsstellung des Rundmagazins ein Diafach des Gefachringes über der dem rechten Projektionssystem zugeordneten Bildbühne steht.

Die zusätzlich zum Magazintransport erfolgende, quer verlaufende Hin- und Herbewegung des Magazins zwischen den Projektionsstrahlengängen erfordert einen aufwendigen und teueren Antriebsmechanismus. Darüber hinaus stören die zusätzlich auftretenden Schaltgeräusche erheblich.

Der Erfindung liegt die Aufgabe zugrunde, mit einfachen Mitteln ein Rundmagazin für einen Überblendprojektor mit zwei Bildbühnen und zwei Projektionssystemen zu schaffen und derart auszubilden, daß beim Überblendprojektor eine Verschiebevorrichtung zwischen den beiden Projektionssystemen nicht erforderlich ist.

Die Aufgabe wird erfindungsgemäß dadurch gelöst, daß das Rundmagazin zwischen einem inneren und einem äußeren Wandungsring zwei konzentrisch zueinander angeordnete Ringreihen von Diafächern aufweist und daß die Diafächer der einen Ringreihe in die Zwischenabstände der Diafächer der anderen Ringreihe hineinragen.

Durch dieses Ineinandergreifen der Diafächer kann das Rundmagazin raumsparend und kompakt ausgeführt werden, wobei die Anzahl der Diafächer der inneren Ringreihe gleich der Anzahl der Diafächer der äußeren Ringreihe entspricht.

In einer weiteren vorteilhaften Ausgestaltung der Erfindung sind die Diafächer der inneren Ringreihe und die Diafächer der äußeren Ringreihe zur Vertikalen derart geneigt, daß sie mit den projektorseitig unter gleichen Neigungswinkeln verlaufenden, zu den nebeneinander liegenden und im wesentlichen im Abstand der Diafächer zueinander versetzt angeordneten Projektionsbühnen führenden Fallschächten fluchten. Durch diese bauliche Maßnahme erfolgt eine zusätzliche Verkleinerung der Außenform des Rundmagazins.

Weitere Merkmale und Vorteile der Erfindung ergeben sich aus der Beschreibung eines in der Zeichnung in schematischer Form dargestellten Ausführungsbeispiels, wobei alle zum Verständnis der Erfindung nicht notwendigen Teile der Übersichtlichkeit wegen weggelassen wurden.

Es zeigen

Figur 1 das Rundmagazin in Verbindung mit einem ohne Gehäuseabdeckung gezeigten Überblendprojektor in einer Draufsicht;

Figur 2 das Rundmagazin in Verbindung mit einem Überblendprojektor gemäß Fig. 1 im Schnitt entlang der Linie I-I;

Figur 3 das Rundmagazin gemäß Fig. 1 in einer teilweisen Darstellung in Draufsicht;

Figur 4 das Rundmagazin gemäß Fig. 3 im Schnitt entlang der Linie II-II;

Figur 5 das Rundmagazin gemäß Fig. 3 im Schnitt entlang der Linie III-III und

Figur 6 die Bodenplatte des Rundmagazins gemäß Fig. 1 und 3 in einer Teildarstellung in Draufsicht.

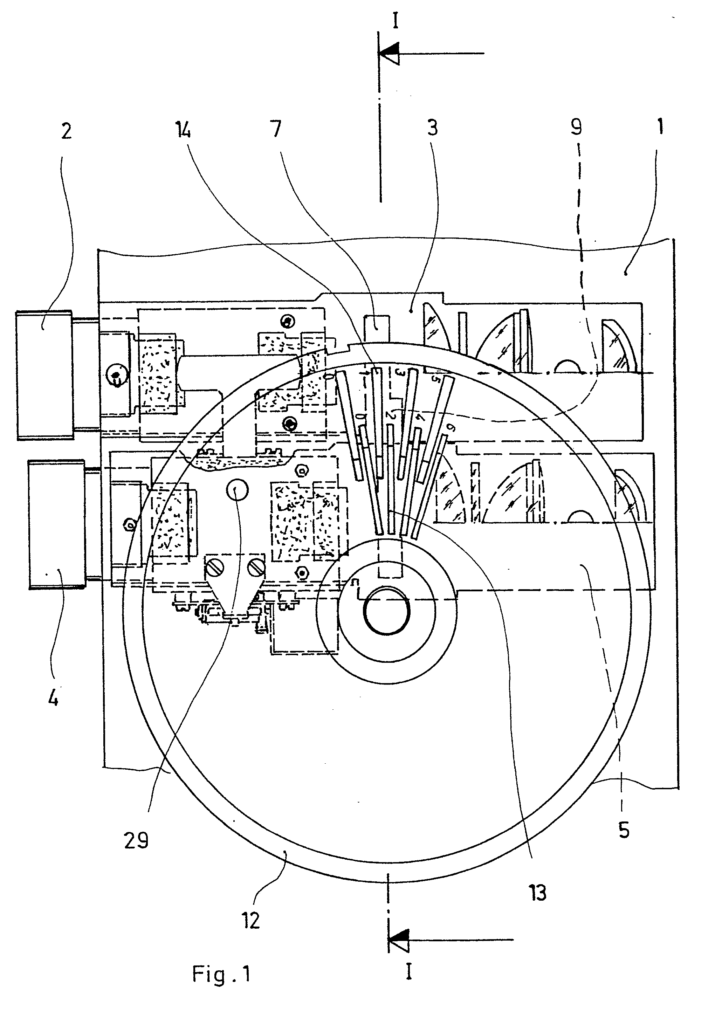

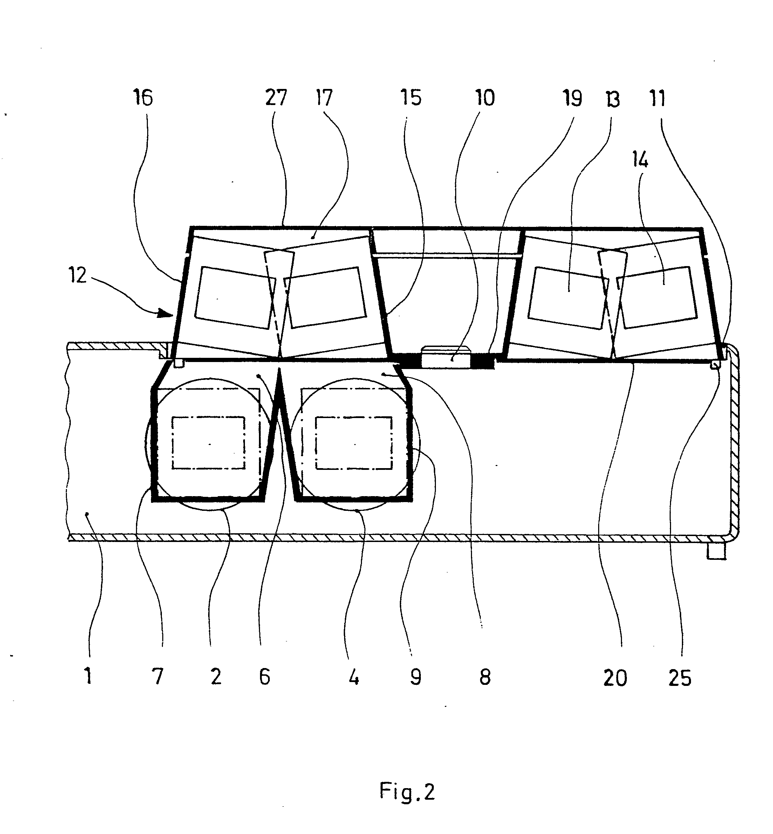

In den Fig. 1 und 2 ist mit 1 ein Überblendprojektor bezeichnet, der zwei nebeneinander liegende Projektionssysteme 3 und 5 aufweist. Mit 2 und 4 sind die beiden Projektionsobjektive, mit 6 und 8 jeweils ein Fallschacht und mit 7 und 9 die beiden Projektionsbühnen bezeichnet.

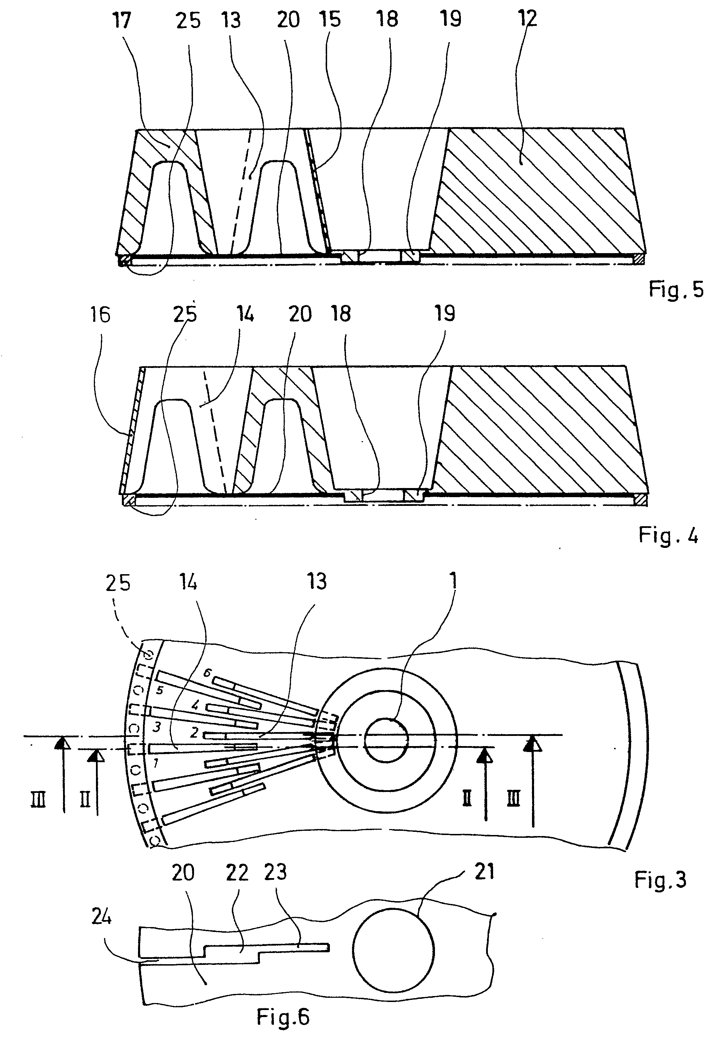

Das Rundmagazin 12 ist in eine kreisrunde Ausnehmung 11 in der Projektoroberseite eingesetzt. Es besteht aus einem Gefachkörper 17. Dieser besitzt einen inneren Wandungsring 15 und einen äußeren Wandungsring 16. Zwischen beiden Wandungsringen 15 und 16 sind zwei konzentrisch zueinander angeordnete Ringreihen von Diafächern 13 und 14 vorgesehen (Fig. 3 bis 5), wobei die Diafächer 13 der einen Ringreihe in die Zwischenabstände der Diafächer 14 der anderen Ringreihe hineinragen.

Dem inneren Wandungsring 15 ist ein Bodenansatz zugeordnet, der eine mit einer Mittenbohrung 18 versehene Nabe 19 aufweist.

Mit dem Gefachkörper 17 ist eine um die Nabe 19 drehbare Bodenplatte 20 verbunden. Mit 29 (Fig. 1) ist ein Fixierloch bezeichnet, in das bei in Funktionsstellung im Projektor befindlichem Rundmagazin ein projektorseitiger Fixierzapfen (nicht dargestellt) eingreift, der die Bodenplatte 20 unverdrehbar fixiert.

Beim Einsetzen des Rundmagazins in den Projektor tritt eine projektorseitige Spindel 10 (Fig. 2) in die Mittenbohrung 18 der Nabe 19. Diese Spindel 10 verdrängt einen Verriegelungsschieber (nicht dargestellt) — der so ausgebildet sein kann, wie er in der DE-PS 12 63 342 beschrieben ist — aus der die Bodenplatte 20 mit dem Gefachkörper 17 arretierenden Stellung, so daß der Gefachkörper 17 gegenüber der geststehenden Bodenplatte 20 über einen projektorseitigen, mit den Transportstiften 25 zusammenwirkenden Magazintransportmechanismus verdrehbar ist. Die Anzahl der Diafächer 13 der inneren Ringreihe ist gleich der Anzahl der Diafächer 14 der äußeren Ringreihe.

Um das Rundmagazin so raumsparend wie nur möglich auszubilden, sind die Diafächer 13 der inneren Ringreihe und die Diafächer 14 der äußeren Ringreihe zur Vertikalen entgegengesetzt geneigt. Im Ausführungsbeispiel sind die Diafächer 13 der inneren Ringreihe nach innen in Richtung zur Magazinachse und die Diafächer 14 der äußeren Ringreihe nach außen entgegen zur Magazinachse geneigt. Sie fluchten mit den projektorseitig unter gleichen Neigungswinkeln verlaufenden und zu den nebeneinander liegenden und im wesentlichen im Abstand der Diafächer 13 und 14 zueinander versetzt angeordneten Fallschächten 6 und 8 der Projektionsbühnen 7 und 9 (Fig. 2).

Wie aus der Fig. 6 ersichtlich ist, besitzt die Bodenplatte 20 eine radial verlaufende, schlitzförmige Diadurchtrittsöffnung 22, die einen zum Rand hin offenen und den Diafächern 14 der äußeren Ringreihe zugeordneten ersten Schlitzteil 24 sowie einen versetzt angeordneten und den Diafächern 13 der inneren Ringreihe zugeordneten zweiten Schlitzteil 23 aufweist.

Mit 27 ist eine aus durchsichtigem Material hergestellte und am oberen Rand des Gefachkörpers aufgesetzte Magazinabdeckung bezeichnet.

Die Funktion ist im wesentlichen folgende :

Gemäß Fig. 1 befindet sich das Magazin 12, nachdem es von der Nullstellung einen ersten Magazintransportschritt ausgeführt hat, in einer Stellung, in der die Diafächer Nummer 1/2 sich über den Projektionsbühnen 7 und 9 befinden. Beide Dias 1 und 2 gelangen gleichzeitig in die Bildbühnen 7 und 9. Das Dia 1, das sich in der Projektionsbühne 7 befindet, kann aufgeblendet und projiziert werden. Während der nachfolgenden Abblendung von Dia 1 wird das Dia 2 in der Projektionsbühne 9 aufgeblendet und projiziert.

Beim nächsten Diawechsel wird das Dia 1 in das Magazin (Diafach 14) zurücktransportiert und anschließend der Gefachkörper 17 des Magazins 12 um einen Schritt weitertransportiert, bis die Diafächer Nummer 3/4 über den Projektionsbühnen in Stellung sind. Es gelangt nunmehr das Dia 3 in die Projektionsbühne 7 und kann aufgeblendet und projiziert werden, während gleichzeitig das Dia 2 in der Projektionsbühne 9 abgeblendet wird.

Beim nächsten Diawechsel wird der Gefachkörper 17 wieder einen Schaltschritt zurücktransportiert, so daß die Diafächer Nummer 1/2 wieder in Stellung sind. Anschließend wird das Dia 2 ins Magazin (Diafach 13) zurücktransportiert. Unmittelbar danach wird der Gefachkörper 17 wieder einen Schaltschritt vorwärtstransportiert, so daß die Diafächer Nummer 3/4 wieder in Stellung über den Projektionsbühnen sind. Dann gelangt das Dia 4 in die Projektionsbühne 9. Nunmehr kann das Dia 3 in der Projektionsbühne 7 abgeblendet und das Dia 4 in der Projektionsbühne 9 aufgeblendet und projiziert werden.

Beim nächsten Diawechsel wird das Dia 3 aus der Projektionsbühne 7 heraus und ins Magazin zurückbefördert. Anschließend wird der Gefachkörper 17 einen Schaltschritt weitertransportiert, bis die Diafächer Nummer 5/6 über den Projektionsbühnen in Stellung sind. Es gelangt das Dia 5 in die Projektionsbühne 7 und kann aufgeblendet und projiziert werden, während gleichzeitig das Dia 4 in der Projektionsbühne 9 abgeblendet wird.

Der auf diese Weise im Pilgerschritt erfolgende Magazintransport wird solange fortgesetzt, bis sämtliche im Magazin untergebrachte Diapositive projiziert sind.

Bei der Rückwärtsprojektion erfolgt der Pilgerschritt sinngemäß in umgekehrter Richtung.

**Ansprüche**

1. Rundmagazin zur Aufnahme von Diapositiven, das lösbar mit einem zwei Bildbühnen und zwei Projektionssysteme aufweisenden Überblendprojektor verbindbar ist und das aus einer feststehenden Bodenplatte mit einer Öffnung für den Durchtritt der Diapositive und einem auf der Bodenplatte drehbar gelagerten Gefachkörper besteht, dadurch gekennzeichnet, daß das Rundmagazin (12) zwischen einem inneren und einem äußeren Wandungsring (15, 16) zwei konzentrisch zueinander angeordnete Ringreihen von Diafächern (13, 14) aufweist und daß die Diafächer (13) der einen Ringreihe in die Zwischenabstände der Diafächer (14) der anderen Ringreihe hineinragen.

2. Rundmagazin nach Anspruch 1, dadurch gekennzeichnet, daß die Anzahl der Diafächer (13) der inneren Ringreihe gleich der Anzahl der Diafächer (14) der äußeren Ringreihe ist.

3. Rundmagazin nach den Ansprüchen 1 und 2, dadurch gekennzeichnet, daß die Diafächer (13) der inneren Ringreihe und die Diafächer (14) der äußeren Ringreihe zur Vertikalen derart entgegengesetzt geneigt sind, daß sie mit den projektorseitig unter gleichen Neigungswinkeln verlaufenden, zu den nebeneinander liegenden und im wesentlichen im Abstand der Diafächer (13 und 14) zueinander versetzt angeordneten Projektionsbühnen (7, 9) führenden Fallschächten (6, 8) fluchten.

4. Rundmagazin nach den Ansprüchen 1 bis 3, dadurch gekennzeichnet, daß die Bodenplatte (20) eine radial verlaufende, schlitzförmige Diadurchtrittsöffnung (22) aufweist, die einen zum Rand hin offenen und den Diafächern (14) der äußeren Ringreihe zugeordneten ersten Schlitzteil (24) sowie einen versetzt angeordneten und den Diafächern (13) der inneren Ringreihe zugeordneten zweiten Schlitzteil (23) aufweist.

## Claims

1. Drum-type slide magazine which can be releasably connected to a dissolving projector having two film gates and two projection systems and which consists of a stationary bottom plate with an opening for the passage of the slides and a compartment body rotatably mounted on said bottom plate, characterized in that the drum-type magazine (12) comprises, between an inner and an outer annular wall (15, 16), two concentrical annular rows of slide compartments (13, 14) and in that the slide compartments (13) of one annular row extend into the spaces between the slide compartments (14) of the other annular row.

2. Drum-type magazine according to claim 1, characterized in that the number of slide compartments (13) of the inner annular row equals the number of slide compartments (14) of the outer annular row.

3. Drum-type magazine according to claims 1 and 2, characterized in that the slide compartments (13) of the inner annular row and the slide compartments (14) of the outer annular row are oppositely inclined towards the vertical such that they are aligned with the chutes (6, 8) of the projector, which chutes are disposed at the same angles of inclination and lead to the film gates (7, 9) arranged side by side in a staggered position substantially at the same distance from each other as the slide compartments (13 and 14).

4. Drum-type magazine according to claims 1 to 3, characterized in that the bottom plate (20) has a radially disposed slit-shaped slide passage opening (22) which comprises a first slit portion (24) open towards the edge and associated with the slide compartments (14) of the outer annular row as well as a second, offset slit portion (23) associated with the slide compartments (13) of the inner annular row.

## Revendications

1. Magasin circulaire de diapositives, qui peut être monté amoviblement sur un projecteur en fondu-enchaîné muni de deux fenêtres de projection et de deux systèmes de projection et qui est constitué d'une plaque de fond fixe percée d'une ouverture pour le passage des diapositives et d'un corps à compartiments monté à rotation sur cette plaque, magasin (12) caractérisé en ce qu'il comprend, entre des parois annulaires interne et externe (15, 16), deux rangées annulaires concentriques de compartiments de diapositives (13, 14), et en ce que les compartiments de diapositives (13) d'une rangée annulaire s'étendent dans les espaces qui séparent les compartiments de diapositives (14) de l'autre rangée annulaire.

2. Magasin circulaire conforme à la revendication 1, caractérisé en ce que le nombre des compartiments de diapositives (13) de la rangée annulaire interne est égal au nombre des compartiments de diapositives (14) de la rangée annulaire externe.

3. Magasin circulaire conforme aux revendications 1 et 2, caractérisé en ce que les compartiments de diapositives (13) de la rangée annulaire interne et les compartiments de diapositives (14) de la rangée annulaire externe présentent des inclinaisons opposées par rapport à la verticale de manière à être alignés avec les couloirs de guidage (6, 8) du projecteur, ces couloirs présentant des angles d'inclinaison égaux et conduisant aux fenêtres de projection (7, 9) qui sont agencées côte-à-côte en étagement, à une distance l'une de l'autre pratiquement identique à celle qui sépare les compartiments de diapositives (13 et 14).

4. Magasin circulaire conforme aux revendications 1 à 3, caractérisé en ce que la plaque de fond (20) présente une ouverture (22) en forme de fente disposée radialement pour le passage des diapositives, ouverture qui comprend une première partie en forme de fente (24) qui s'ouvre vers le bord de la plaque et qui est associée aux compartiments de diapositives (14) de la rangée annulaire externe, et une deuxième partie en forme de fente (23), décalée, associée aux compartiments de diapositives de la rangée annulaire interne.

Fig.1

Fig.2

Fig. 5

Fig. 4

Fig. 3

Fig. 6